# EUROPEAN PATENT APPLICATION

(11) **EP 4 475 091 A1**
(43) Date of publication of application: **11.12.2024**
(21) Application number: 23305913.8
(22) Date of filing: 08.06.2023
(51) Int. Cl.: G06V 20/10, G01S 13/90, G06V 10/72

(54) **A METHOD FOR DETERMINING AT LEAST A WIND FEATURE ABOVE A BODY OF WATER**

(71) Applicant: TOTALENERGIES ONETECH, 92400 Courbevoie (FR)
(72) Inventor: GARDASHLI, Turgay, 92078 PARIS LA DEFENSE CEDEX (FR); ALBERGEL, Simon, 92078 PARIS LA DEFENSE CEDEX (FR); ENEAU, Cédric, 92078 PARIS LA DEFENSE CEDEX (FR); LE BORGNE, Emmanuel, 92078 PARIS LA DEFENSE CEDEX (FR)
(74) Representative: Lavoix

(57) **Abstract**

The invention relates to a method for determining a wind feature above a body of water, the method comprising the following phases:
- a phase of building a training database comprising the following steps:
• collecting synthetic aperture radar data,
• collecting, for each SAR data, a wind speed for the corresponding body of water at the time of acquisition of the SAR data,
• applying a processing treatment, called averaging treatment, on the SAR images of each SAR data, so as to obtain averaged data for each SAR data,
• building the training database by associating the collected wind speed and the averaged data of each SAR data,

- a phase of training a determination model on the basis of the training database,
- a phase of operating the trained determination model.

## Description

### TECHNICAL FIELD OF THE INVENTION

The present invention concerns a method for determining at least a wind feature above a body of water. The present invention also concerns an associated computer program product. The present invention also relates to an associated readable information carrier.

### BACKGROUND OF THE INVENTION

Global energy consumption is a critical issue that affects both the economy and the environment. The demand for energy is continuously growing, and it is projected to increase by more than 25% by 2040. However, most of the world's energy is still produced from non-renewable sources, such as coal, oil, and gas, which account for over 80% of global energy consumption. The reliance on these fossil fuels contributes significantly to global warming and environmental pollution, making the transition to renewable energy sources increasingly urgent.

Offshore wind energy has emerged as a promising option to meet the growing demand for clean energy. Offshore wind turbines can harness strong, consistent winds that are often available offshore, generating electricity that can be transmitted to the onshore grid. The International Energy Agency projects that offshore wind capacity will grow over 15 times its current capacity by 2040, reaching a total capacity of 1,400 GW. The importance of offshore wind energy lies in its potential to replace fossil fuels, reduce greenhouse gas emissions, and help mitigate climate change. As part of this shift, there has been a rise in studies aiming to evaluate the potential of renewable energy resources worldwide, particularly in relation to wind and solar energy. These studies seek to quantify the energy potential of these resources in both space and time to meet the strategic and operational goals of future projects. To achieve this, there is a pressing need to intensify research efforts on meteorological data acquisition in various regions worldwide and to apply computational modeling techniques to evaluate renewable energy resources.

However, obtaining accurate in-situ measurements of wind speed can be challenging and costly due to the need for specialized equipment and the need to deploy it in the field. Moreover, in-situ measurements can only provide localized information and cannot cover a wide area, making it difficult to get a complete picture of wind speed over a large region. Furthermore, in-situ measurements cannot look into the historical time span, which limits their ability to provide long-term trends and patterns.

In contrast, remote sensing provides a cost-effective, non-invasive method for estimating wind speed over a large area. One of the remote sensing technologies used for wind energy assessment is Synthetic Aperture Radar (SAR). SAR works by transmitting microwave pulses from a radar antenna towards the ground and measuring the backscattered energy that is reflected back from the surface. The radar antenna is usually mounted on a satellite or an aircraft, which allows for the collection of large amounts of data over large areas. SAR measurements are obtained by analyzing the time delay and phase shift of the backscattered energy, which provide information about the distance and topography of the surface features. The resulting SAR images are grayscale images that represent the radar reflectivity of the surface features, with brighter areas indicating higher reflectivity.

There are several methods and models currently used for wind retrieval froP SAR images. These include physical models that use geophysical model functions (GMFs) to retrieve sea surface wind speed from satellite-borne Synthetic Aperture Radar (SAR) images. CMOD5.N is the one of most widely used GMF algorithm for wind retrieval from Synthetic Aperture Radar (SAR) images. It is based on the empirical relationship between the radar backscatter coefficient and the incidence angle of the radar, and the wind speed at the ocean surface. CMOD5.N has been developed by analyzing SAR images and wind speeds from atmospheric models.

There have been limited studies conducted to validate wind estimates froP SAR measurements using in-situ data, which have concluded that significant biases still exist, even for CMOD5.N. One reason for this is that SAR surface winds are derived by inverting backscatter with geophysical model functions (GMFs) that were originally designed for scatterometers. However, there may be differences between the SAR backscatter and scatterometer data due to different resolutions and the lack of inter-calibration between the two technologies. Additionally, the GMFs were empirically designed using the European Centre for Medium-Range Weather Forecasts (ECMWF) numerical model as a reference, which may not be accurate in coastal areas. The in-situ data were only used for validation and a posteriori bias correction. Furthermore, GMFs may not fully capture the complex relationship between sea state and wind speed, especially because they assume a neutral atmosphere. Therefore, improving the accuracy of SAR wind speeds obtained with GMFs is necessary, particularly because wind power is sensitive to estimation and is proportional to the cube of the wind speed.

An important limitation that arises with the current utilization of these models pertains to their reliance on additional input parameters, such as wind direction or temperature, for the accurate determination of wind speed. This shortcoming poses a significant obstacle for industrial applications, where the unavailability of such data points in the desired location undermines the practical utility of these models.

### SUMMARY OF THE INVENTION

Hence, there exists a need for a method enabling a simplified and more accurate estimation of wind features above a body of water using SAR images.

To this end, the invention relates to a method for determining at least a wind feature above a body of water, such as a portion of ocean, sea or lake, the method comprising the following phases which are computer-implemented:
- a phase of building a training database comprising the following steps:
   - collecting synthetic aperture radar data, called SAR data, for a plurality of bodies of water, the SAR data having been acquired by one or several SAR system(s) having P defined acquisition channels, P being superior or equal to two, each SAR data comprising P SAR images corresponding to each defined acquisition channel,
   - collecting, for each SAR data, a wind speed for the corresponding body of water at the time of acquisition of the SAR data,
   - applying a processing treatment, called averaging treatment, on the SAR images of each SAR data, so as to obtain averaged data for each SAR data, the averaging treatment comprising:
      ∘ dividing each SAR image into N zones, N being superior or equal to two,
      ∘ computing, for each of the N zones, a mean value of the pixel values so as to obtain N mean values for each SAR image,
         the averaged data of each SAR data comprising the N mean values of each of the P SAR images with an information data associated to each mean value, the information data comprising an information relative to the position, on the corresponding SAR image, of the zone used for computing, and the defined acquisition channel from which the SAR image has been acquired,
   - building the training database by associating the collected wind speed and the averaged data of each SAR data,
- a phase of training a determination model on the basis of the training database so as to obtain a trained determination model configured for determining wind feature(s) above a body of water, as a function of averaged data obtained after applying an averaging treatment on SAR data of the body of water,
- a phase of operating the trained determination model comprising the following steps:
   - receiving SAR data of a body of water, the SAR data comprising P SAR images,
   - applying an averaging treatment on the SAR images so as to obtain averaged data, and
   - determining, by the trained determination model, wind feature(s) on the body of water as a function of the averaged data.

The method according to the invention may comprise one or more of the following features considered alone or in any combination that is technically possible:
- each of the N zones of each SAR image is symmetrical to another zone with respect to a reference point on the SAR image, the reference point being preferably the center of the SAR image;
- the N zones of each SAR image have the same size and have the form of a rectangle or of a square;
- N is superior or equal to four, preferably N being equal to four;
- the averaging treatment also comprises:
   - detecting predetermined elements, such as ships and platforms, on the SAR images of the considered SAR data,
   - suppressing the pixel(s) of the SAR images corresponding to the detected elements so as to obtain pretreated SAR images,
   the division of each SAR image into N zones being carried out on the pretreated SAR images;
- a wind feature determined by the trained determination model is the wind speed at a first altitude, the method comprising a phase of determining the wind speed at a second altitude, higher than the first altitude, by applying an elevation model on the wind speed at the first altitude;
- the determination model is a Multi-Layer Perceptron model or an Extreme Gradient Boosting model;
- the wind feature(s) determined by the trained determination model comprise a wind speed and/or a wind direction;
- the acquisition channels comprise a channel whose measurements depend on the incidence angle of the electromagnetic flux received on the radar and at least a channel whose measurements depend on the polarization of the electromagnetic flux received on the radar and on the polarization of the emitted electromagnetic flux, preferably the acquisition channels comprise a channel whose measurements depend on co-polarization and a channel whose measurements depend on cross-polarization, co-polarization referring to measurements of the received electromagnetic flux with the same polarization as the emitted electromagnetic flux, cross-polarization referring to measurements of the received electromagnetic flux with a polarization orthogonal to that of the emitted electromagnetic flux;
- the wind speed collected during the phase of building the training database have been measured by sensors, preferably by sensors fixed on buoys in the corresponding body of water;
- the wind speed collected during the phase of building the training database have been measured at a time corresponding to the end of the acquisition of the corresponding SAR data;
- the determined wind feature(s) enable determining the extractable wind energy by an installation of wind turbines on the body of water.

The invention also relates to a computer program product comprising a readable information carrier having stored thereon a computer program comprising program instructions, the computer program being loadable onto a data processing unit and causing a method as previously described to be carried out when the computer program is carried out on the data processing unit.

The invention also relates to a readable information carrier on which is stored a computer program product as previously described.

### BRIEF DESCRIPTION OF THE DRAWINGS

The invention will be easier to understand in view of the following description, provided solely as an example and with reference to the appended drawings in which:
- Figure 1 is a schematic view of an example of a computer for implementing a method for determining at least a wind feature above a body of water,
- Figure 2 is a schematic representation illustrating the implementation of phases of a method for determining at least a wind feature above a body of water, and
- Figure 3 is a schematic representation of an example of SAR images coming from different defined acquisition channels.

### DETAILED DESCRIPTION OF SOME EMBODIMENTS

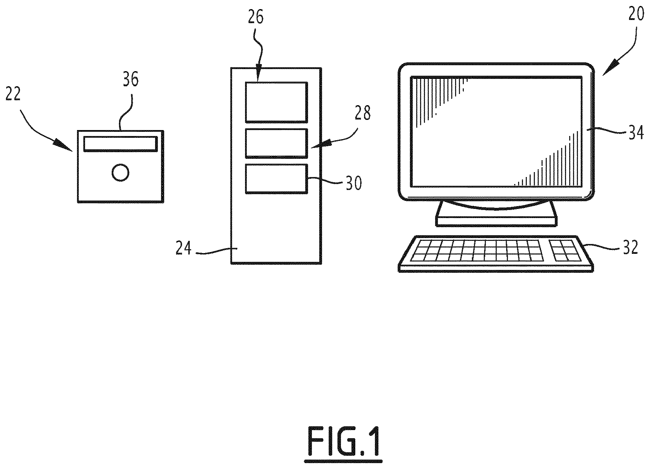

A computer 20 and a computer program product 22 are illustrated in figure 1.

The computer 20 is preferably a computer.

More generally, the calculator 20 is a computer or computing system, or similar electronic computing device adapted to manipulate and/or transform data represented as physical, such as electronic, quantities within the computing system's registers and/or memories into other data similarly represented as physical quantities within the computing system's memories, registers or other such information storage, transmission or display devices.

The calculator 20 interacts with the computer program product 22.

As illustrated on figure 1, the calculator 20 comprises a processor 24 comprising a data processing unit 26, memories 28 and a reader 30 for information media. In the example illustrated on figure 1, the calculator 20 comprises a human machine interface 32, such as a keyboard, and a display 34.

The computer program product 22 comprises an information medium 36.

The information medium 36 is a medium readable by the calculator 20, usually by the data processing unit 26. The readable information medium 36 is a medium suitable for storing electronic instructions and capable of being coupled to a computer system bus.

By way of example, the information medium 36 is a USB key, a floppy disk or flexible disk (of the English name "Floppy disc"), an optical disk, a CD-ROM, a magneto-optical disk, a ROM memory, a memory RAM, EPROM memory, EEPROM memory, magnetic card or optical card.

On the information medium 36 is stored the computer program 22 comprising program instructions.

The computer program 22 is loadable on the data processing unit 26 and is adapted to entail the implementation of a method for determining at least a wind feature above a body of water W, when the computer program 22 is loaded on the processing unit 26 of the calculator 20.

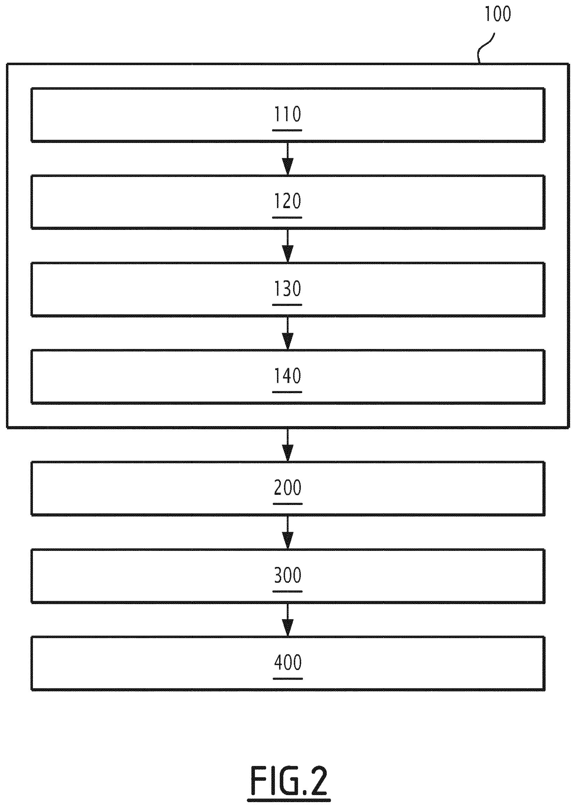

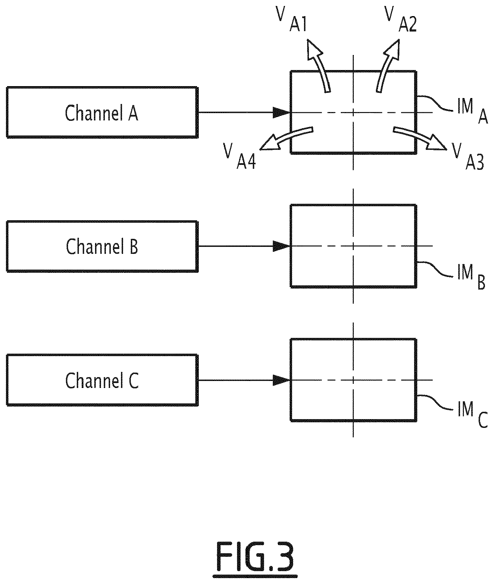

A method for determining at least a wind feature above a body of water W will now be described with reference to the organigram of figure 2, and to figure 3 which illustrate examples of a phase of this method.

The body of water W is, for example, a portion of ocean, sea or lake, or any other body of water W.

The determination method comprises a phase 100 of building a training database DB. The building phase 100 is, for example, implemented by the calculator 20 interacting with the computer program product 22, that is to say is computer-implemented.

The building phase 100 comprises a step 110 for collecting synthetic aperture radar data, called SAR data, for a plurality of bodies of water W. The bodies of water W are, for example, in different geographical areas.

The SAR data have been acquired by one or several SAR system(s) having P defined acquisition channels. P is superior or equal to two. Each SAR data comprise P SAR images corresponding to each defined acquisition channel. Each SAR image is an image of the body of water W.

Preferably, the acquisition channels comprise a channel whose measurements depend on the incidence angle of the electromagnetic flux received on the radar and at least a channel whose measurements depend on the polarization of the electromagnetic flux received on the radar and on the polarization of the emitted electromagnetic flux. Advantageously, there is at least a channel whose measurements depend on co-polarization and a channel whose measurements depend on cross-polarization. Co-polarization refers to measurements of the received electromagnetic flux with the same polarization as the emitted electromagnetic flux, such that both is vertical or horizontal (VV or HH). Cross-polarization refers to measurements of the received electromagnetic flux with a polarization orthogonal to that of the emitted electromagnetic flux (VH or HV).

In an example of implementation, the SAR system is the Sentinel 1 which provides SAR data for this study from a dual-polarization C-band Synthetic Aperture Radar (SAR) instrument at 5.405GHz (C band). The SAR data is obtained from the Sentinel-1 Ground Range Detected (GRD) scenes, which are processed using the Sentinel-1 Toolbox to generate calibrated, ortho-corrected products. The collection is updated daily and contains all of the GRD scenes, each with 10 meters resolution, 2 bands (VV and VH polarization). Additionally, each scene includes an angle band containing the approximate incidence angle from ellipsoid in degrees at every point. The pre-processing steps used for these scenes include thermal noise removal, radiometric calibration, and terrain correction using Shuttle Radar Topography Mission (SRTM) or Advanced Spaceborne Thermal Emission and Reflection Radiometer Digital Elevation Model (ASTER DEM). These pre-processing steps provide valuable data for further analysis and modeling.

The building phase 100 comprises a step 120 for collecting, for each SAR data, a wind speed for the corresponding body of water W at the time of acquisition of the SAR data. The wind speed is used as a ground truth during the training phase.

Preferably, the wind speed have been measured at a time corresponding to the end of the acquisition of the corresponding SAR data.

Preferably, the wind speed have been measured by sensors, preferably by sensors fixed on buoys in the corresponding body of water W.

In an example of implementation, the buoys came from the Data Buoy Center (NDBC). A total of 11 buoy stations enable collecting wind measurements serving as ground truth data for model training and evaluation. The selected buoy stations were strategically located near the California coast and other regions of interest.

The building phase 100 comprises a step 130 for applying a processing treatment, called averaging treatment, on the SAR images of each SAR data, so as to obtain averaged data for each SAR data.

The averaging treatment comprises:
∘ dividing each SAR image into N zones, N being superior or equal to two, and
∘ computing, for each of the N zones, a mean value of the pixel values so as to obtain N mean values for each SAR image.

Hence, for each SAR data a number of NxP mean values are obtained.

The averaged data of each SAR data comprise the N mean values of each of the P SAR images with an information data associated to each mean value, the information data comprising an information relative to the position, on the corresponding SAR image, of the zone used for computing, and the defined acquisition channel from which the SAR image has been acquired.

For example, figure 3 illustrated 3 SAR images IM_{A}, IM_{B}, IM_{C} acquired by three different channels. Each image is divided into 4 zones, and a mean value of the pixel values is calculated for each zone (V_{A1}, V_{A2}, V_{A3} and V_{A4} for image IM_{A}).

Preferably, each of the N zones of each SAR image is symmetrical to another zone with respect to a reference point on the SAR image, the reference point being preferably the center of the SAR image. This enables not to introduce a directional bias during the training phase.

Preferably, the N zones of each SAR image have the same size and have the form of a rectangle or of a square.

Preferably, N is superior or equal to four. Advantageously, N is equal to four.

Preferably, the averaging treatment also comprises:
- detecting predetermined elements on the SAR images of the considered SAR data,
- suppressing the pixel(s) of the SAR images corresponding to the detected elements so as to obtain pretreated SAR images,
the division of each SAR image into N zones being carried out on the pretreated SAR images. The suppressed pixels are therefore not taken into account during the mean values computation.

The predetermined elements are typically human-made objects, such as ships and platforms, when such objects exhibit high reflectance properties, leading to substantial backscattering that not only corrupts the image itself but also affects neighboring pixels.

Preferably, the detection is performed using an adaptive thresholding operator which facilitates the object detection process by employing three distinct windows around each pixel of interest: the target window, the guard window, and the background window. The target window is ideally sized to detect the smallest object, the guard window encompasses the largest object, and the background window is adequately large to ensure accurate estimation of local statistics.

Furthermore, to address the corruption caused by nearby pixels affected by the detected object, a buffer zone is employed. This buffer zone enables to eliminate the influence of corrupted neighboring pixels, thus enhancing the overall accuracy of the object detection process. By incorporating this buffer zone, the algorithm ensures that the adverse impact of backscattering on nearby pixels is effectively mitigated, resulting in improved image quality and more reliable object detection outcomes.

The building phase 100 comprises a step 140 of building the training database DB by associating the collected wind speed and the averaged data of each SAR data.

The determination method comprises a phase 200 of training a determination model M on the basis of the training database DB so as to obtain a trained determination model M'. The training phase 200 is, for example, implemented by the calculator 20 interacting with the computer program product 22, that is to say is computer-implemented.

The trained determination model M' is configured for determining wind feature(s) above a body of water W, as a function of averaged data obtained after applying an averaging treatment (as described in step 130) on SAR data of the body of water W.

Preferably, the wind feature(s) determined by the trained determination model M' comprise a wind speed and/or a wind direction.

The determination model M is a deep learning model.

Preferably, the determination model M is a convolutional neural network (CNN).

The training technique is typically based on supervised learning, with training and validation substeps (performed by dividing the training database DB, for example 80% of the data for the training substep and 20% of the data for the validation substep).

In an example, the determination model M is a Multi-Layer Perceptron model or an Extreme Gradient Boosting model.

Preferably, the determination method comprises a phase 300 of operating the trained determination model M'. The operating phase 300 is, for example, implemented by the calculator 20 interacting with the computer program product 22, that is to say is computer-implemented. In the description, the term "operating" is equivalent to the term "inferring".

The operating phase 300 comprises the following steps:
- receiving SAR data relative to a body of water W, the SAR data comprising P SAR images,
- applying an averaging treatment (as described in step 130) on the SAR images so as to obtain averaged data, and
- determining, by the trained determination model M', wind feature(s) on the body of water W as a function of the averaged data.

Hence, the wind features are obtained by the trained determination model M' only on the basis of SAR data.

Preferably, the determined wind feature(s) enable determining the extractable wind energy by an installation of wind turbines on the body of water W. For example, this enables also evaluating whether the body of water W is suitable for the installation of wind turbines.

Preferably, when a wind feature determined by the trained determination model M' is the wind speed at a first altitude, the determination method comprises a phase 400 of determining the wind speed at a second altitude, higher than the first altitude, by applying an elevation model on the wind speed at the first altitude.

The second altitude is typically closest to the turbine heights, typically ranging from 200 to 300 meters.

An example of implementation of phase 400 is described below. Atmospheric models that provide wind speed estimates at various heights are employed for training. For the training process, data points are carefully selected from the North Sea region to fine-tune the model specifically for wind energy assessment in this area. Furthermore, LiDAR data is utilized to perform quality checks on the provided atmospheric model, ensuring a high level of confidence in its accuracy and reliability. Consequently, a second machine learning model is developed, which takes a single input (wind speed at the ocean surface) and maps it to a corresponding output (wind speed at 200 meters).

To evaluate the performance of the model, a total of six data points from the North Sea region are selected. Among these, five points are used for training and validation purposes, while the remaining data point is reserved for independent testing. This partitioning strategy enables to assess the generalization capability of the model and its ability to accurately extrapolate wind speeds to turbine heights. By employing machine learning techniques and leveraging atmospheric models, the methodology offers a promising approach to estimate wind speeds at elevated heights, relevant for wind energy assessment. The careful selection of training data from the North Sea region and the integration of LiDAR data for quality control further enhance the reliability and applicability of the model.

The above method has been implemented and enables to obtain simple and good estimation of wind features above a body of water W using SAR images. In particular, the application of an averaging treatment consisting in dividing the images into several zones, enables to render the wind estimation more accurate.

In particular during implementation, various machine learning models were employed, including XGBoost and Multi-Layer Perceptron (MLP), to predict wind speeds based on SAR image inputs. The models underwent rigorous training and validation processes, utilizing techniques such as data augmentation, batch normalization, and dropout regularization to improve performance and prevent overfitting. The results demonstrated significant improvements over baseline physical models, with the neural network models achieving lower root mean square (RMS) errors and better accuracy in wind speed predictions.

Additionally, the study investigated the vertical extrapolation of wind speeds using atmospheric models. While LiDAR data was limited in its ability to provide measurements at higher altitudes, the incorporation of atmospheric models allowed for the prediction of wind speeds at turbine heights. The models were fine-tuned using data from the North Sea region, a significant area for wind energy assessment.

Overall, the findings from this study highlight the effectiveness of machine learning approaches in wind speed prediction. These models showed promising results in capturing complex relationships and patterns between SAR images and wind speeds.

The research presented carried out by the inventors make a significant contribution to the field of wind energy assessment, particularly focusing on coastal regions. By harnessing the power of machine learning techniques, valuable insights have been obtained, offering a compelling alternative to traditional physical models. These developed models exhibit immense potential in enhancing wind resource assessments, thereby playing a pivotal role in supporting decision-making processes for renewable energy planning and development.

The person skilled in the art will understand that the embodiments and variants described above can be combined to form new embodiments provided that they are technically compatible.

## Claims

1. A method for determining at least a wind feature above a body of water (W), such as a portion of ocean, sea or lake, the method comprising the following phases which are computer-implemented:
- a phase of building a training database (DB) comprising the following steps:
• collecting synthetic aperture radar data, called SAR data, for a plurality of bodies of water, the SAR data having been acquired by one or several SAR system(s) having P defined acquisition channels, P being superior or equal to two, each SAR data comprising P SAR images corresponding to each defined acquisition channel,
• collecting, for each SAR data, a wind speed for the corresponding body of water (W) at the time of acquisition of the SAR data,
• applying a processing treatment, called averaging treatment, on the SAR images of each SAR data, so as to obtain averaged data for each SAR data, the averaging treatment comprising:
∘ dividing each SAR image into N zones, N being superior or equal to two,
∘ computing, for each of the N zones, a mean value of the pixel values so as to obtain N mean values for each SAR image,
the averaged data of each SAR data comprising the N mean values of each of the P SAR images with an information data associated to each mean value, the information data comprising an information relative to the position, on the corresponding SAR image, of the zone used for computing, and the defined acquisition channel from which the SAR image has been acquired,
• building the training database (DB) by associating the collected wind speed and the averaged data of each SAR data,
- a phase of training a determination model (M) on the basis of the training database (DB) so as to obtain a trained determination model (M') configured for determining wind feature(s) above a body of water (W), as a function of averaged data obtained after applying an averaging treatment on SAR data of the body of water (W),
- a phase of operating the trained determination model (M') comprising the following steps:
• receiving SAR data of a body of water (W), the SAR data comprising P SAR images,
• applying an averaging treatment on the SAR images so as to obtain averaged data, and
• determining, by the trained determination model (M'), wind feature(s) on the body of water (W) as a function of the averaged data.

2. A method according to claim 1, wherein each of the N zones of each SAR image is symmetrical to another zone with respect to a reference point on the SAR image, the reference point being preferably the center of the SAR image.

3. A method according to claim 1 or 2, wherein the N zones of each SAR image have the same size and have the form of a rectangle or of a square.

4. A method according to any one of claims 1 to 3, wherein N is superior or equal to four, preferably N being equal to four.

5. A method according to any one of claims 1 to 4, wherein the averaging treatment also comprises:
- detecting predetermined elements, such as ships and platforms, on the SAR images of the considered SAR data,
- suppressing the pixel(s) of the SAR images corresponding to the detected elements so as to obtain pretreated SAR images,
the division of each SAR image into N zones being carried out on the pretreated SAR images.

6. A method according to any one of claims 1 to 5, wherein a wind feature determined by the trained determination model (M') is the wind speed at a first altitude, the method comprising a phase of determining the wind speed at a second altitude, higher than the first altitude, by applying an elevation model on the wind speed at the first altitude.

7. A method according to any one of claims 1 to 6, wherein the determination model (M) is a Multi-Layer Perceptron model or an Extreme Gradient Boosting model.

8. A method according to any one of claims 1 to 7, wherein the wind feature(s) determined by the trained determination model (M') comprise a wind speed and/or a wind direction.

9. A method according to any one of claims 1 to 8, wherein the acquisition channels comprise a channel whose measurements depend on the incidence angle of the electromagnetic flux received on the radar and at least a channel whose measurements depend on the polarization of the electromagnetic flux received on the radar and on the polarization of the emitted electromagnetic flux, preferably the acquisition channels comprise a channel whose measurements depend on co-polarization and a channel whose measurements depend on cross-polarization, co-polarization referring to measurements of the received electromagnetic flux with the same polarization as the emitted electromagnetic flux, cross-polarization referring to measurements of the received electromagnetic flux with a polarization orthogonal to that of the emitted electromagnetic flux.

10. A method according to any one of claims 1 to 9, wherein the wind speed collected during the phase of building the training database (DB) have been measured by sensors, preferably by sensors fixed on buoys in the corresponding body of water (W).

11. A method according to any one of claims 1 to 10, wherein the wind speed collected during the phase of building the training database (DB) have been measured at a time corresponding to the end of the acquisition of the corresponding SAR data.

12. A method according to any one of claims 1 to 11, wherein the determined wind feature(s) enable determining the extractable wind energy by an installation of wind turbines on the body of water (W).

13. A computer program product comprising a readable information carrier having stored thereon a computer program comprising program instructions, the computer program being loadable onto a data processing unit and causing a method according to any one of claims 1 to 12 to be carried out when the computer program is carried out on the data processing unit.

14. A readable information carrier on which a computer program product according to claim 13 is stored.
